# EUROPÄISCHE PATENTSCHRIFT

(11) **EP 1 338 562 B1**
(45) Veröffentlichungstag und Bekanntmachung des Hinweises auf die Patenterteilung: **05.01.2005**
(21) Anmeldenummer: 03002451.7
(22) Anmeldetag: 05.02.2003
(51) Int. Cl.: C01C 1/02, C01C 1/08, B01D 53/94, B01D 53/86, F01N 3/20

(54) **Verfahren und Vorrichtung zur Erzeugung von Ammoniak**
Process and apparatus for producing ammonia
Procédé et dispositif pour la production d'ammoniac

(30) Priorität: 14.02.2002 DE 10206028
(43) Veröffentlichungstag der Anmeldung: 27.08.2003
(73) Patentinhaber: MAN Nutzfahrzeuge Aktiengesellschaft, 80976 München (DE)
(72) Erfinder: Jacob, Eberhard, Dr., 82152 Krailing (DE); Müller, Werner, Prof. Dr., 67663 Kaiserslautern (DE); Herr, Andreas, 67659 Kaiserslautern (DE); Käfer, Sebastian, 67292 Kirchheimbolanden (DE); Lacroix, Andreas, 67475 Weidenthal (DE)

(56) Entgegenhaltungen:
- EP-A- 0 615 777
- EP-A- 1 054 139
- EP-A- 1 096 116
- DE-A- 19 913 462
- US-A- 5 809 775
- US-A- 6 119 448

## Beschreibung

Die Erfindung betrifft gemäß dem Oberbegriff des Anspruchs 1 ein Verfahren und gemäß dem Oberbegriff des Anspruchs 9 eine Vorrichtung zur Erzeugung von Ammoniak (NH₃) und dessen anschließende Einspeisung als Reduktionsmittel in einen aus einem Verbrennungsprozess eines Motors, einer Gasturbine oder eines Brenners resultierenden Abgasstrom für die selektive katalytische Reduktion darin enthaltener Stickoxide.

Ammoniak (NH₃) dient in den betrachteten Anwendungsfällen als Reduktionsmittel, das vor einem speziellen SCR-Katalysator oder vor einer in einen Schalldämpfer integrierten Gruppe von parallel durchströmbaren SCR-Katmodulen in die Abgasleitung von Verbrennungsmotoren, Gasturbinen oder Brennern eingeleitet wird und im SCR-Katsystem die Reduktion der im Abgas enthaltenen Stickoxide bewirkt. SCR bedeutet Selective Catalytic Reduction.

Für die Erzeugung von Ammoniak (NH₃) sind bisher verschiedene Methoden bekannt geworden, auf die nachfolgend eingegangen ist.

In der EP 0487886 A2 wird eine Methode für eine quantitative Zersetzung einer wässrigen Harnstofflösung durch Hydrolyse zu Ammoniak (NH₃) und Kohlendioxid (CO₂) in einem Temperaturbereich von 160°C bis 550°C vorgeschlagen, bei der im Ergebnis unerwünschte Reaktionsprodukte, wie Isocyansäure (HNCO) und Kohlenmonoxid (CO), vermieden werden. Bei dieser bekannten Methode wird die Hamstofflösung zunächst mittels einer Düse auf einen im Abgas befindlichen Verdampfer/Katalysator gesprüht. Die dabei entstehenden gasförmigen Produkte werden in einem nachgeschalteten Hydrolysekatalysator nachbehandelt, bevor sie zur Reduktion der Stickoxide in einen SCR-Katalysator gelangen.

Aus der EP 0555746 A2 ist eine Methode bekannt, die jene der EP 0487886 A2 ergänzt. Letzteres in der Weise, dass der Verdampfer aufgrund seiner Ausgestaltung die Harnstofflösung homogen und so verteilt, dass der Kontakt der Tröpfchen mit den Kanalwandungen sichergestellt ist. Durch eine homogene Verteilung werden Ablagerungen auf den Katalysatoren und Harnstoffschlupf vermieden. Die Hamstoffdosierung sollte nur bei Abgastemperaturen ab 160°C aktiviert werden, da beim Unterschreiten dieser Temperatur unerwünschte Nebenprodukte gebildet werden.

Ein Nachteil der wässerigen Harnstofflösung ist, dass ihre Herstellung aufgrund der Notwendigkeit von deionisiertem Wasser vergleichsweise teuer ist. Deionisiertes Wasser ist deshalb erforderlich, um die Katalysatoroberflächen dauerhaft vor Kalkablagerungen zu schützen. Durch den hohen Wasseranteil der Harnstofflösung (32,5 %ige Lösung) muss im Vergleich zu trockenem Harnstoff oder einer Mischung von Harnstoff mit einer geringen Wassermenge ein deutlich höheres Gewicht und größeres Volumen der Anlage in Kauf genommen werden.

Ein weiterer Nachteil der wässerigen Harnstofflösung ergibt sich in Bezug auf die Wintertauglichkeit. Der Gefrierpunkt einer 32,5 %igen Harnstofflösung liegt bei -11°C. Bei sehr niedrigen Temperaturen müssen der Vorratsbehälter und das Dosiersystem beheizt werden. Weiterhin müssen für die Verdampfung der Harnstofflösung 80 % der dazu notwendigen Energie allein für die Verdampfung des Wassers aufgebracht werden. Dies führt zu einer Absenkung der Abgastemperatur und damit bei niedrigen Temperaturen unter Umständen zu einem geringeren Stickoxidumsatz.

Anstelle der wässrigen Harnstofflösung schlägt die EP 0615777 B1 trockenen Harnstoff in Form von Prills mit Durchmessern bis 5 mm oder Mikroprills mit einem Durchmesser zwischen 10 und 1000 µm als Reduktionsmittel bei der SCR-Technologie vor. Die Mikroprills werden mittels einer Dosiervorrichtung unter Zuhilfenahme von Druckluft in die Abgasleitung eingedüst. Bei der Verwendung von trockenen Harnstoff besteht die Gefahr, dass die Mikroprills untereinander verbacken bzw. verkleben. Um die Dosierung nicht zu beeinträchtigen, muss die Fließfähigkeit der Mikroprills erhalten bleiben. Vorgeschlagen wird dazu die luftdichte Verpackung der Mikroprills oder die Einpuderung der Mikroprills mit organischen Stickstoffverbindungen.

In der EP 0878608 A2 wird das Schmelzprodukt von reinem Harnstoff als Reduktionsmittel zur selektiven katalytischen oder nicht-katalytischen Stickoxidreduktion verwendet. Der trockene Harnstoff liegt zunächst als Pulver oder.in kristalliner Form in einem Vorratsbehälter vor. Je nach Motorlast und -drehzahl wird dem Wärmeübertrager über eine Förderschnecke eine bestimmte Menge Harnstoff zugeführt. Der von einem Abgasteilstrom durchströmte Wärmeüberträger nutzt die Abgaswärme zur Verflüssigung des festen Harnstoffs. Dieser Vorgang läuft bei Temperaturen zwischen 133°C (Schmelztemperatur von Harnstoff) und 250°C ab. Angestrebt werden allerdings nur Temperaturen bis 160°C, um unerwünschte Nebenprodukte, wie z.B. Cyanursäure, zu vermeiden. Das entstandene Schmelzprodukt enthält das eigentliche Reduktionsmittel Ammoniak (NH₃) und gegebenenfalls Isocyansäure (HNCO). Das Schmelzprodukt wird durch eine Hochdruckeinspritzpumpe über eine oder mehrere Einspritzdüsen in das Abgas eingedüst. Ort der Eindüsung ist beim SCR-Verfahren unmittelbar vor dem Katalysator und bei nicht-katalytischen Verfahren der Brennraum.

In der US 5809775 A wird ein zur NOₓ-Reduktion geeigneter Feststoff in einem Gasgenerator durch Erhitzen in ein ammoniakhaltiges Gas umgewandelt. Dabei muss das bevorzugte NOₓ-Reduktionsmittel Harnstoff zur Pyrolyse auf mindestens 300°C erhitzt werden, wohingegen andere Reduktionsmittel, wie z.B. Ammoniumcarbamat, lediglich auf 40°C erhitzt werden müssen. Anschließend wird das ammoniakhaltige Gas dem Abgas über eine Einspritzdüse zugeführt. Das Gas/Abgas-Gemisch wird dann in einen SCR-Katalysator geleitet. Die US 5809775 A offenbart ein Gesamtsystem, bestehend aus Möglichkeiten der Bevorratung des festen Reduktionsmittels in einem Gefäß mit einem Auslass, ferner Möglichkeiten, das Reduktionsmittel in einem Gefäß zu erhitzen und das ammoniakhaltige Gas zu produzieren und schließlich, das Gas dem Abgas zuzuführen und das Gas/Abgasgemisch in den SCR-Katalysator zu leiten. In einem Ausführungsbeispiel stehen die Behälter zur Bevorratung und Pyrolyse unter Druck.

Die US 5968464 A beschreibt ein Verfahren und eine Vorrichtung zur NOₓ-Reduktion, bei dem eine wässrige Harnstofflösung auf eine beheizte Fläche einer Pyrolysekammer gespritzt wird, die eine Auslassöffnung für die gasförmigen Produkte der Harnstoffpyrolyse und Wasserverdampfung besitzt. Hierbei bleibt die Lösung solange mit der beheizten Oberfläche der Pyrolysekammer in Kontakt, bis der Harnstoff vollständig pyrolysiert und das Wasser verdampft ist. Die gasförmigen Reaktionsprodukte werden bei einer für die selektive katalytische Reduktion geeigneten Temperatur in das Abgassystem eingeleitet.

In der WO 98/42623 wird ein Verfahren und eine Vorrichtung zur Reduktion von Stickoxiden beschrieben. In einer bevorzugten Version wird dabei eine wässrige Harnstofflösung mit einer Konzentration von ca. 1.0 % bis 50 % Harnstoffmasse in eine Hydrolysekammer gespritz. Dieser Reaktor hat seine typische Betriebstemperatur zwischen 125°C und 180°C und einen Betriebsgasdruck von ca. 20 psig bis 200 psig. Die Verweildauer der reagierenden Flüssigkeit im Reaktor ist so gewählt, dass das gasförmige Reaktionsprodukt, bestehend aus Ammoniak, Kohlendioxid und Wasserdampf, bei kontrolliertem Druck und Massenstrom aus der Kammer entnommen und dabei auf mindestens 60°C gehalten wird. Insgesamt gesehen können Harnstoffkonzentrationen von 1 % bis 77 % verwendet werden, bei Temperaturen von ca. 110°C bis 300°C und Betriebsgasdrücken von 30 psig bis 500 psig. Temperatur und Gasdruck werden über die Wärmezufuhr in den Reaktor geregelt.

In der JP 63198713 A wird eine Methode beschrieben, mit der die Stickoxide aus dem Abgas von Dieselmotoren entfernt werden. Dabei wird dem Abgas Ammoniak (NH₃) zugemischt, das bei der Reaktion von Harnstoff und Wasser gebildet wird. Das Abgas wird mit einem TiO₂-Katalysator in Kontakt gebracht.

In der DE 19903439 A1 wird ein Verfahren zur Dosierung von Reduktionsmittel beschrieben, bei dem die zudosierte Reduktionsmittelgrundmenge von der Lastgröße und wenigstens einer weiteren Betriebskenngröße z. B. der Drehzahl bestimmt wird. Darüber hinaus ist die Dosiermenge anhand von mindestens einer weiteren Betriebsgröße z. B. der Abgastemperatur korrigierbar.

Um das Reduktionsmittelspeichervermögen eines SCR-Katalysators auszunutzen, wird in der DE 19901915 A1 eine Dosierstrategie vorgeschlagen, bei der das Reduktionsmittel bis zum Erreichen eines Grenzwertes überstöchiometrisch dosiert wird. Danach wird die Dosierung beendet oder unterstöchiometrisch fortgesetzt. Der Vorteil besteht in einer hohen mittleren Stickoxidkonvertierung, besonders bei wechselnden Betriebsbedingungen.

Die DE 19855385 A1 offenbart eine Reduktionsmitteldosierungs- und Verdampfungseinrichtung, bei der das Reduktionsmittel über eine sich am Abgasrohr befindliche (Heiz-)Düse eingebracht wird. Durch das Aufheizen der Düse auf 300 °C bis 360 °C wird das Reduktionsmittel weitgehend verdampft.

Um die Umsetzung von Harnstoff zu Ammoniak zu begünstigen, wird in der DE 19913462 A1 ein Reaktor beschrieben, der in einem Teilstrom des Abgasstranges sitzt. Dort herrschen geringere Strömungsgeschwindigkeiten als im Abgasvollstrom, somit ist die Verweildauer des eingebrachten Harnstoffes im Reaktor größer und es steht mehr Zeit zur chemischen Umsetzung zur Verfügung.

Die DE 19922959 A1 beschreibt eine Abgasreinigungsanlage, bei der das Reduktionsmittel dampfförmig vor einem Stickoxid-Reduktionskatalysator eingebracht wird. Der Verdampfer besitzt als Wärmequelle eine beheizbare Prallfläche, auf die das flüssige Reduktionsmittel unter Druck aufgebracht wird. Um Harnstoff in Ammoniak umzuwandeln, kann die Prallfläche katalytisch beschichtet werden. Die Zudosierung des Reduktionsmittels kann im Abgashauptstrom oder in einem entnommenen Teilstrom erfolgen.

In der DE 19949296 A1 wird eine Heizeinrichtung für einen Reduktionsmittelpresskörper beschrieben, die an einen Gassammelraum angeschlossen ist. Das entstandene gasförmige Reduktionsmittel wird über ein Dosierventil einer sich im Abgasteilstrom befindenden Reaktionskammer zur thermischen Umsetzung zugeführt. Die Reaktionskammer mündet in die Abgasleitung.

In der EP 1096116 A2 wird ein Verfahren und eine Vorrichtung zur kombinierten katalytischen NOₓ-Reduktion und Schalldämpfung von Abgas im Abgasstrang einer Brennkraftmaschine beschrieben. Dabei ist in den Abgasstrang ein als Verdampfer, Strömungsmischer, Hydrolyse- und NOₓ-Reduktionskatalysator fungierender Harnstoffzersetzungskatalysator eingebaut und in den Abgasstrang vor diesem ist Harnstoff in fester oder gelöster Form eindüsbar. Die Umsetzung des Harnstoffes in Ammoniak und andere gasförmige Abfallprodukte ist dabei abhängig von der Abgastemperatur und dem Restsauerstoffgehalt des Abgases.

Auch in der EP 1054139 A1 ist ein Abgasstrang eines Verbrennungsmotors aufgezeigt, in den vor einem SCR-Kat ein Verdampfer eingebaut ist. In den Abgasstrang ist vor dem Verdampfer mittels einer Dosiereinrichtung fester oder flüssiger Harnstoff einspeisbar, der am Verdampfer zu Ammoniak umsetzbar ist. Der Verdampfer enthält als Wärmequelle eine beheizbare Prallplatte oder einen Mikrowellengenerator.

In der DE 19913462 A1 ist ein Verfahren zur thermischen Hydrolyse und Dosierung von Harnstoff aufgezeigt, das in einem Reaktor abläuft, der in einen Zweig eines an einer Brennkraftmaschine abgehenden Abgasstranges eingebaut ist. In den vom Abgas durchströmten Reaktor ist Harnstoff in fester oder flüssiger Form eindüsbar. Das im Reaktor erzeugte Ammoniak (NH₃) wird anschließend mit dem Abgas einem SCR-Katalysator zur dortigen NOₓ-Reduktion zugeführt.

Der vorliegenden Erfindung liegt die Aufgabe zugrunde, ein Verfahren und eine Vorrichtung zu schaffen, mit dem bzw. der sich aus festem Harnstoff in vorteilhafter Weise Ammoniak (NH₃), das anschließend einer prozesuralen Weiterverwendung zuführbar ist, erzeugen lässt, ohne dass dabei schädliche Nebenprodukte auftreten.

Diese Aufgabe ist erfindungsgemäß durch ein Verfahren der im Anspruch 1 angegebenen Art und eine Vorrichtung der im Anspruch 9 angegebenen Art gelöst.

Details des erfindungsgemäßen Verfahren sowie Einzelheiten und Ausgestaltungen der erfindungsgemäßen Vorrichtung sind in den jeweils abhängigen Unteransprüchen gekennzeichnet.

Bei der Entstehung der Erfindung wurden einige Vorüberlegungen angestellt, auf die nachfolgend näher eingegangen ist. Als Bezugsbasis hierfür wurde ein mobiles System wie ein Kraftfahrzeug angenommen, dessen aus der Verbrennung seines Motors hervorgehendes Abgas zwecks Erfüllung künftiger gesetzgeberisch vorgeschriebener Abgasgrenzwerte einer katalytischen Nachbehandlung unterzogen werden muss. Bei einem Kraftfahrzeug müssen bestimmte Zielkonflikte gelöst sein, obschon die Verbrauchs-, Leistungs- und Emissionscharakteristik teilweise gegenläufige Zielsetzungen haben. Durch die Bestrebungen, das Kraftstoffverbrauchsverhalten der Motoren weiter zu verbessern, werden die Bedingungen für Abgasnachbehandlungsmaßnahmen immer schwieriger, da das Abgastemperaturniveau absinkt. Im Gegenzug erhöhen sich die NOₓ-Emissionen des Motors, da die Verbrennungsspitzentemperatur ansteigt. Unter den für Dieselmotoren oder mager betriebenen Ottomotoren typischen mageren Abgasbedingungen ist für die NOₓ-Reduktion ein Reduktionsmittel erforderlich, wobei für den Fahrzeugeinsatz bei der Verwendung der SCR-Katalysatortechnologie Harnstoff als ammoniakbildendes Reduktionsmittel favorisiert wird.

Das für die katalytische Reduktion erforderliche Ammoniak wird bei der thermischen Zersetzung des Harnstoffs gebildet. Hierfür sind die folgenden Reaktionen relevant:

Die Thermolyse von Harnstoff führt zu Ammoniak (NH₃) und Isocyansäure (HNCO).

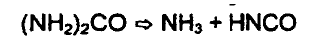

Die Isocyansäure (HNCO) wird in Anwesenheit von Wasser (H₂O) zu Ammoniak (NH₃) und Kohlendioxid (CO₂) hydrolysiert.

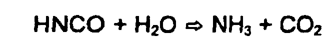

Bei den in Verbindung mit Kraftfahrzeugen bekannten Anwendungen von Harnstoff-SCR-Katalysatorsystemen wird in der Regel das Motorabgas unter Ausnutzung von dessen Wärmeinhalt zur thermischen Zersetzung des Harnstoffs genutzt. Prinzipiell kann die Thermolyse bereits vor dem Katalysator ablaufen, während die Hydrolyse in der Gasphase nur auf dem SCR-Katalysator oder einem Hydrolysekatalysator mit nennenswerter Geschwindigkeit abläuft, wobei insbesondere die Hydrolyse zu einer verspäteten Ammoniakfreisetzung führt. Dies bedeutet, dass ohne Hydrolysereaktion maximal 50 % der im Harnstoff gespeicherten NH₃-Menge beim Eintritt in den SCR-Katalysator zur Verfügung steht. Hinzu kommt, dass aufgrund der Platzverhältnisse die Dosierstelle für das Reduktionsmittel in der Regel unmittelbar vor dem SCR-Katalysator vorgesehen werden musste, wodurch die Zeitspanne, die für die Zersetzung zur Verfügung steht, sehr gering ist. Dieser Sachverhalt führt insbesondere bei hohen Raumgeschwindigkeiten im Abgas zu Problemen, da hier ein großer Teil des Reduktionsmittels erst im Katalysator aufbereitet wird und diesen teils in Form von Schlupf verlässt.

Die Problematik der Reduktionsmittelaufbereitung wird beispielsweise bei einer Pkw-Anwendung hoch durch den Umstand verschärft, dass ein Pkw-Dieselmotor vorwiegend im Teillastbereich betrieben wird und das Abgastemperaturniveau daher vergleichsweise niedrig ist. Einerseits kann bei niedrigen Abgastemperaturen von keiner spontanen und vollständigen Harnstoffzersetzung ausgegangen werden, d. h. in diesem Bereich ist die Zersetzungskinetik eine umsatzlimitierende Größe. Andererseits führt die Wärme, die dem Abgas für die thermische Zersetzung des Harnstoffs entzogen wird, zu einer weiteren Absenkung des ohnehin schon geringen Temperaturniveaus, d. h. die Aktivität des Katalysators kann unter diesen Umständen eingeschränkt werden. Dieser Nachteil wird bei Verwendung einer wässrigen Harnstofflösung mit z. B. 32,5 Gew.- % Harnstoff besonders deutlich, da hier eine erhebliche Wärmemenge für die Verdampfung des Wassers benötigt wird.

Aus den genannten Gründen bietet ein Abgasnachbehandlungssystem, bei dem das Reduktionsmittel Ammoniak wie bei der Erfindung gasförmig in den Abgasstrom des Motors eingebracht wird, enorme Vorteile. Auch die Gefahr von unerwünschtem Ammoniakschlupf ist deutlich geringer als bei Einbringung einer wässrigen Harnstofflösung.

Da die Speicherung von gasförmigem Ammoniak in der Regel sehr problematisch und insbesondere in einem Fahrzeug unter Sicherheitsaspekten indiskutabel ist, wird daher gemäß der Erfindung ein Verfahren vorgeschlagen, bei dem der Harnstoffzersetzungsprozess - vom Abgassystem entkoppelt - in einer speziellen Zersetzungsvorrichtung durchgeführt wird. Dabei hätte grundsätzlich die Möglichkeit bestanden, dieser den Harnstoff entweder in trockener Festkörperform oder in Form einer Harnstoffwasserlösung zuzuführen. Um diese beiden Möglichkeiten im Hinblick auf ihre Serientauglichkeit bewerten zu können, wurden zur Abschätzung der Wärmemengen, die zur thermischen Zersetzung von Harnstoff-Wasser-Gemischen bzw. trockenem Harnstoff erforderlich sind, thermodynamische Berechnungen durchgeführt. Hierbei hat sich gezeigt, dass für die reine Thermolyse einer Harnstoff-Wasser-Mischung eine größere Wärmemenge benötigt wird als für die Thermohydrolyse (Thermolyse + Hydrolyse). Dies hängt damit zusammen, dass es sich bei der Thermolyse um eine endotherme und bei der Hydrolyse um eine exotherme Reaktion handelt.

Ein weiterer wichtiger Einflussfaktor ist der Wasseranteil in der Mischung, da eine erhebliche Wärmemenge für die Erwärmung und Verdampfung des Wassers erforderlich ist. In diesem Zusammenhang kann eine Mischung mit einem Harnstoffmassenanteil von 76,9 %hervorgehoben werden, da sie nur die Wassermenge beinhaltet, die für die Thermohydrolyse erforderlich ist, d. h. es muss kein überschüssiges Wasser erwärmt werden. Obwohl bei der Thermohydrolyse dieser Mischung die Verdampfungswärme für das Wasser zugeführt werden muss, ist die erforderliche Wärmemenge geringer als bei der Thermolyse von trockenem Harnstoff. Allerdings zeigen Harnstoff-Wasser-Mischungen mit einem Harnstoffanteil von mehr als 60 % eine geringe Langzeitstabilität und sind damit für die Verwendung als Reduktionsmittel nicht geeignet. Es wurde letztendlich gefunden, dass energetisch am günstigsten jener Fall ist, bei dem trockener Harnstoff thermisch zersetzt und für die anschließende Hydrolyse Wasser, z. B. in einem Abgasteilstrom enthaltenes, verwendet wird, da hier die Wärmemenge, die für die Verdampfung des Wassers der Harnstoffwasserlösung erforderlich wäre, entfällt. Daneben bietet der trockene Harnstoff noch den Vorteil der uneingeschränkten Wintertauglichkeit und der größten, auf die Reduktionsmittelmasse bezogenen gespeicherten Ammoniakmasse.

Die gewählte Zersetzungstemperatur ist bei dem erfindungsgemäßen Verfahren ein Parameter von zentraler Bedeutung, da in bestimmten Temperaturbereichen unerwünschte Reaktionsprodukte entstehen.

Auf der Grundlage von thermogravimetrischen Untersuchungen wurde ermittelt, dass bei der Thermolyse von trockenem Harnstoff ab einer Temperatur oberhalb von 400°C ausschließlich gasförmige Reaktionsprodukte gebildet werden. Weiterführende Untersuchungen haben gezeigt, dass durch die Verwendung eines Hydrolysekatalysators auch die Thermolysereaktion katalysiert werden kann, wodurch sich die Zersetzungstemperatur für den Harnstoff bis auf einen Wert von 200°C absenken lässt.

Auf der Basis dieser Ergebnisse und Erkenntnisse wird die Zersetzungstemperatur für den Harnstoff in dem genannten Temperaturbereich so gewählt, dass unter Berücksichtigung von energetischen Aspekten ein optimales Thermohydrolyseergebnis erreicht wird, d.h. bei der Harnstoffzersetzungsreaktion wird praktisch nur Ammoniak (NH₃) und Kohlendioxid (CO₂) gebildet.

Ein weiterer wichtiger Gesichtspunkt, der einen entscheidenden Einfluss auf die energetische Bilanz hat, ist der in den Reaktor für die dortige Hydrolyse einzuspeisende Wassermassenstrom. Am günstigsten ist es, diesen über einen vom Abgashauptstrom abgezweigten Abgasteilstrom als dessen Bestandteil in den Reaktor einzuspeisen. Dabei ist folgendes zu berücksichtigen. Wenn die Abgastemperatur unterhalb der eingestellten Zersetzungstemperatur für den Harnstoff liegt, wird der Abgasteilstrom in einer Größenordnung realisiert, dass dem Reaktor nur die Wassermenge zugeführt wird, die aus der Stöchiometrie der Hydrolysereaktion resultiert, weil in diesem Fall eine elektrische Heizleistung zum Aufheizen des Abgasteilstroms erforderlich ist. Liegt dagegen die Abgastemperatur oberhalb der eingestellten Zersetzungstemperatur, -können-größere-Abgasteilströme in den Reaktor eingeleitet werden, da in diesem Fall dann über das Abgas ein Wärmestrom eingespeist wird, der eine Verminderung der elektrischen Heizleistung für die Blitzthermolyse des Harnstoffs bewirkt. Die Obergrenze ist hierbei durch die Reaktionskinetik der Harnstoffzersetzung und damit durch die Verweildauer bzw. die Raumgeschwindigkeit im Reaktor gegeben. Die katalysierte Hydrolyse wird durch stöchiometrische Verhältnisse begünstigt, d. h., die zur Hydrolyse der Isocyansäure erforderliche Wassermenge und damit der Abgasteilstrom können nach oben begrenzt werden.

Abhängig von dem aktuellen Reduktionsmittelbedarf des Abgasnachbehandlungssystems wird der beschriebene Zersetzungsprozess durch eine kontinuierliche. bzw. diskontinuierliche Hamstoffzufuhr in den Reaktor durchgeführt. Die diskontinuierliche Erzeugung und Zuführung des Reduktionsmittels Ammoniak (NH₃) zur Stickoxid-Minderung im Abgas von Verbrennungsmotoren ist deshalb möglich, weil die SCR-Katalysatoren ein von der Abgastemperatur abhängiges Speicherverhalten gegenüber dem aus der Harnstoffzersetzung erzeugten Ammoniak aufweisen.

Das mit dem erfindungsgemäßen Verfahren und der erfindungsgemäßen Vorrichtung erzeugt Reduktionsmittel Ammoniak wird in das Abgassystem des Motors, der Gasturbine oder des Brenners an geeigneter Stelle eingeleitet und zwar stromauf eines SCR-Katalysators oder mehrerer, in einen Schalldämpfer eingebauter, parallel durchströmbarer SCR-Katalysatoren, der bzw. die die Reduktion der im Abgas enthaltenen Stickoxide bewirken. Da im Fall der Anwendung in Verbindung mit Verbrennungsmotoren als Reduktionsmittel ausschließlich unmittelbar vorher erzeugter Ammoniak in das Abgas eingespeist wird, kann die Aktivität des SCR-Katsystems bei kaltem Verbrennungsmotor und während dessen Warmlaufs gegenüber jenen Methoden, bei denen Harnstoff gebunden in wässriger Lösung oder als Pulver im Abgasstrom aufbereitet würde, entscheidend verbessert werden, da der Füllstand der im SCR-Katsystem gespeicherten Ammoniakmenge schon unmittelbar nach dem Starten des kalten Verbrennungsmotors auf ein für ein schnelles Anspringen der Stickoxidreduktion günstiges Niveau gebracht werden kann.

Bei dem erfindungsgemäßen Verfahren wird unter Verwendung der erfindungsgemäßen Vorrichtung das gewünschte Reduktionsmittel Ammoniak (NH₃) im Reaktor unter Zufuhr elektrischer Energie durch eine spontane thermische Zersetzung (Blitzthermolyse) von festem Harnstoff ((NH₂)₂CO) in Anwesenheit von Wasser (H₂O) generiert. In einem ersten Reaktionsschritt, der Thermolyse, zerfällt der Harnstoff zu Ammoniak (NH₃) und Isocyansäure (HNCO). Bei der anschließenden Hydrolyse reagiert die Isocyansäure mit Wasser, das z. B. als Produkt aus dem Verbrennungsprozess eines Motors stammt und dem Reaktor zugeführt wird, zu Ammoniak (NH₃) und Kohlendioxid (CO₂). Da diese Hydrolyse in der Gasphase ohne katalytische Unterstützung mit zu geringer Geschwindigkeit abläuft, wird ein Katalysator mit einer geeigneten katalytischen Beschichtung (z.B. Aluminiumoxid Al₂O₃ oder Titandioxid TiO₂) eingesetzt. Das so erhaltene gasförmige Produkt, das idealerweise nur Ammoniak (NH₃) und Kohlendioxid (CO₂) enthält, wird als Reduktionsmittel in das zu reinigende Abgas eines Verbrennungsmotors, einer Gasturbine oder eines Brenners eingebracht. Dort reagiert es im SCR-Katalysatorsystem mit den im Abgas enthaltenen Stickoxiden vorwiegend zu molekularem Stickstoff und Wasser.

Die Hydrolyse ist beim erfindungsgemäßen Verfahren in zweierlei Hinsicht ein wesentlicher Reaktionsschritt. Einerseits neigt die sehr reaktive Isocyansäure (HNCO) zur Kondensation und Bildung von Polymerisationsprodukten (z.B. Biuret, Triuret, Cyanursäure), die sich in Form von festen Ablagerungen in der erfindungsgemäßen Vorrichtung anlagern würden, wodurch die Betriebssicherheit des Systems nicht mehr gewährleistet wäre. Andererseits handelt es sich bei der Hydrolyse um eine exotherme Reaktion, denn sie liefert einen Beitrag zur Reduzierung der Heizleistung.

Das erfindungsgemäße Verfahren kann in mobilen oder stationaren Anlagen, die einen Verbrennungsmotor wie einen Dieselmotor oder einen im Magerbetrieb arbeitenden Ottomotor oder eine Gasturbine oder einen Brenner aufweisen, angewandt werden. Der Brenner kann Teil einer Heizanlage für Wärmeerzeugung sein. Der Verbrennungsmotor kann das Antriebsaggregat aller Arten von Landfahrzeugen einschließlich Schienenfahrzeugen, Luftfahrzeugen und Wasserfahrzeugen sein.

Nachfolgend ist auf das erfindungsgemäße Verfahren und die erfindungsgemäße Vorrichtung anhand eines in der Zeichnung dargestellten Anwendungsbeispiels näher eingegangen. In der Zeichnung zeigen:
- Fig. 1: schematisch eine Brennkraftmaschine, z. B. eines Kraftfahrzeuges, mit Abgasstrang und einer ihr zugeordneten erfindungsgemäßen Vorrichtung, und
- Fig. 2: ein Beispiel für einen beheizten Hydrolysekatalysator der Firma EMITEC.

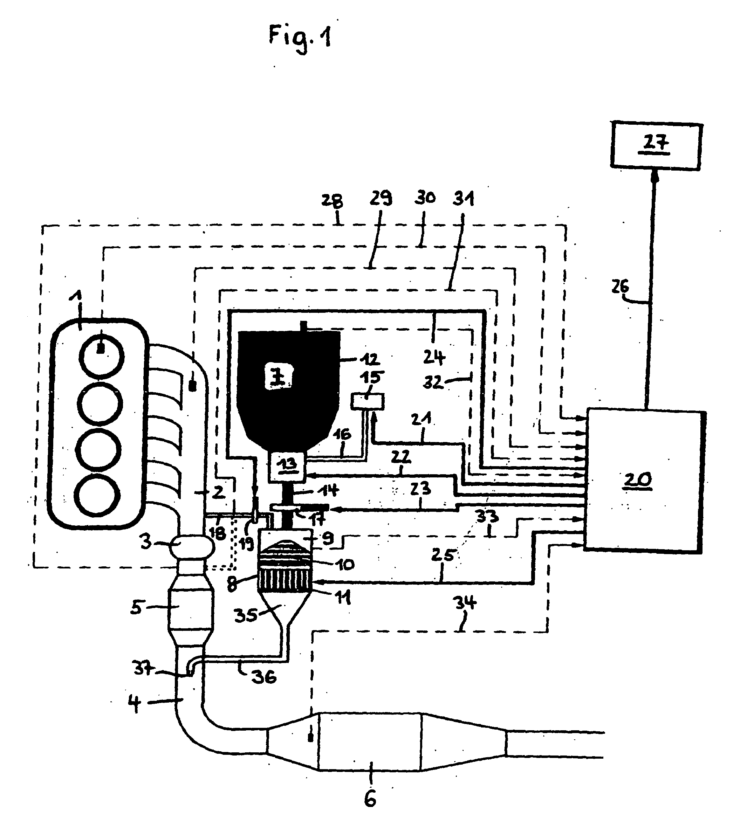

In Fig. 1 ist als Beispiel für ein Aggregat, dessen von ihm erzeugte Abgase einer anschließenden Abgasnachbehandlung unterzogen werden sollen, eine Brennkraftmaschine 1 gezeigt, die die Antriebsquelle z. B. in einem Fahrzeug oder einer stationären Anlage bildet. Das Abgas der Brennkraftmaschine 1 gelangt über die Auslasskanäle und anschließende Abgaskrümmer in eine Abgassammelleitung 2, die an der Turbine 3 eines des weiteren nicht dargestellten Abgasturboladers angeschlossen ist. Ausgangs der Turbine 3 schließt sich eine Abgasleitung 4 an, in der turbinennah ein Vorkatalysator 5 und stromab davon ein SCR-Katalysator 6 oder mehrere, z. B. in einen Schalldämpfer eingebaute, parallel durchströmte SCR-Katalysatoren angeordnet sind. Bei dem Vorkatalysator 5 handelt es sich um einen Oxikat, der neben der Oxidation von Kohlenstoff (CO) und Kohlenwasserstoffen (HC) im Abgassystem die Aufgabe hat, den Anteil von NO₂ im Abgas signifikant zu erhöhen. Zu diesem Zweck ist der Vorkatalysator 5 hinsichtlich seines Volumens und seines Temperaturfensters so im Abgasstrang positioniert, dass er den geforderten bzw. notwendigen NO₂-Anteil im für den SCR-Katalysator 6 optimalen Temperaturbereich generieren kann. Im SCR-Katalysator 6 wird die Reduktion der im Abgas enthaltenen Stickoxide bewirkt.

Einer solchen wie vorbeschriebenen abgaserzeugenden Anlage ist eine erfindungsgemäße Vorrichtung zur Erzeugung von Ammoniak (NH₃) zugeordnet, der unmittelbar anschließend als Reduktionsmittel in den aus dem Verbrennungsprozess der Brennkraftmaschine 1 (oder einer Gasturbine oder einem Brenner) resultierenden Abgasstrom für die selektive katalytische Reduktion darin enthaltener Stickoxide einbringbar ist.

Im einzelnen besteht die erfindungsgemäße Vorrichtung aus
- einem Vorratsbehälter 7, in dem Harnstoff trocken in Pulver-, Granulat- oder Mikroprill-Form bevorratet ist, und
- einem Reaktor 8 zur Ammoniakerzeugung mit einer elektrisch beheizten Reaktionskammer 9, die sich in eine Thermolysezone und eine Hydrolysezone unterteilt, und
- einer Vorrichtung, mit der Harnstoff aus dem Vorratsbehälter 7 in geregelter Menge in die Reaktionskammer 9 des Reaktors 8 einspeisbar ist, und
- ein elektrisches Heizelement 10 in der Thermolysezone der Reaktionskammer 9 des Reaktors 8, und
- einer Vorrichtung zur Regelung der Temperatur des elektrischen Heizelements 10 in der Weise, dass der in die Reaktionskammer 9 eingespeiste Harnstoff durch Blitzthermolyse spontan in Ammoniak (NH₃) und Isocyansäure (HNCO) aufspaltbar ist, und
- einer Vorrichtung zur Einspeisung von Wasser oder eines wasserhaltigen Gases, bei dem es sich um einen Abgasteilstrom aus den Verbrennungsabgasen der Brennkraftmaschine 1 bzw. einer Gasturbine oder eines Brenners handeln kann, in die Reaktionskammer 9 des Reaktors 8, und
- einem Hydrolysekatalysator 11 in der Hydrolysezone der Reaktionskammer 9 des Reaktors 8, mit dem die aus der Blitzthermolyse des Harnstoffs neben Ammoniak (NH₃) hervorgegangene Isocyansäure (HNCO) in Gegenwart von Wasser (H₂O) in Ammoniak (NH₃) und Kohlendioxid (CO₂) umwandelbar ist.

Der Hydrolysekatalysator 11 ist dabei so dimensioniert, dass eine quantitative Umsetzung der Isocyansäure (HNCO) zu Ammoniak (NH₃) und Kohlendioxid (CO₂) möglich ist.

Der Vorratsbehälter 7 ist gegenüber Luftfeuchtigkeitseinflüssen und hohen Temperaturen isoliert. Hierdurch wird verhindert, dass der bevorratete Harnstoff weder schmilzt noch sich aufgrund seiner hygroskopischen Eigenschaften verklebt.

In den Vorratsbehälter 7 ist ein Füllstandsensor 12 integriert, der den Füllstand des Hamstoffs erfasst, welcher durch eine Einrichtung 27 visuell in aktuellem Wert oder bildhaft, gegebenenfalls - wenn ein Minimum erreicht ist - auch akustisch in Form eines Warnsignals angezeigt wird. Liegt dieses Signal vor, muss der Harnstoffvorrat im Vorratsbehälter 7 ergänzt werden.

Dem Vorratsbehälter 7 ist eine Dosiervorrichtung 13 zugeordnet, mit der der Harnstoff unter Zuhilfenahme eines Trägerluftstromes durch eine Förderleitung 14 in die Reaktionskammer 9 des Reaktors 8 eindosierbar ist. Die Dosiereinrichtung 13 ist vom Reaktor 8 mit seiner auf eine Temperatur zwischen 200°C und 450°C beheizten Reaktionskammer 9 ein solches Maß beabstandet und damit thermisch entkoppelt, dass ein Schmelzen des Harnstoffs in der Dosiereinrichtung 13 und ein damit einhergehendes Verstopfen oder Verkleben derselben unterbindbar ist. Diese thermische Entkopplung der Dosiereinrichtung 13 ist durch den den Harnstoff durch die Förderleitung 14 transportierenden kalten Trägerluftstrom unterstützbar. Dieser ist durch eine z. B. elektrisch angetriebene Pumpe 15 erzeugbar oder aus einer vorhandenen Druckluftquelle entnehmbar und der Dosiereinrichtung 13 über eine Speiseleitung 16 zuführbar.

Im Hinblick auf die Empfindlichkeit des Bevorratungs- und Dosiersystems gegenüber Feuchtigkeitseinflüssen, die aus der hygroskopischen Eigenschaft des Harnstoffs resultiert, ist es zweckmäßig, in der Förderleitung 14 zwischen Dosiereinrichtung 13 und Reaktor 8 ein Absperrventil 17 vorzusehen, das vorzugsweise elektromagnetisch steuerbar ist und mit dem die Förderleitung 14 in bestimmten Betriebszuständen, insbesondere dann, wenn keine Ammoniakerzeugung notwendig oder gewünscht ist, absperrbar und so ein Vordringen von Wasser oder Feuchtigkeit aus der Reaktionskammer 9 des Reaktors 8 zur Dosiereinrichtung 13 hin unterbindbar ist.

Neben dem Harnstoff wird im vorliegenden Beispiel als wasserenthaltendes Gas ein Abgasteilstrom in die Reaktionskammer 9 des Reaktors 8 eingespeist, und zwar über eine Speiseleitung 18, die möglichst motornah entweder von der Abgassammelleitung 2 vor der Abgasturbine 3 oder nach dieser von der Abgasleitung 4 strömungsmäßig vor (wie gestrichelt in Fig. 1 eingezeichnet) dem Vorkatalysator 5 abzweigt. In der Regel ist das Druckgefälle vor dem Vorkatalysator 5 ausreichend, um einen Abgasteilstrom in hinreichender Menge zur Verfügung zu stellen. Das für die Hydrolyse der Isocyansäure (HNCO) notwendige Wasser könnte aber auch über andere Mittel, z. B. aus einer Spenderquelle, bereitgestellt und über eine Speiseleitung in die Reaktionskammer 9 eingespeist werden. In die Speiseleitung 18 ist ein vorzugsweise elektrisch steuerbares Absperrorgan 19 wie Absperrventil oder Absperrklappe eingebaut, das zwischen Auf- und Zu-Stellung vorzugsweise auch durchflussmengensteuemde Zwischenstellungen einnehmen kann.

Mit 20 ist eine elektronische Steuereinrichtung bezeichnet, die einen zentralen Mikroprozessor, Daten- und Programmspeicher und eine Ein- und Ausgabeperipherie aufweist, welche Komponenten untereinander über ein Datenbussystem miteinander verknüpft sind. Die Steuereinrichtung 20 regelt und steuert per Programm auf der Basis abgespeicherter Daten und/oder Kennwerte bzw. Kennfelder sowie ihr zugeführter Betriebsistwerte durch Ausgabe entsprechender Befehle den Betrieb und/oder die Einstellung aller am Prozess der Ammoniakerzeugung beteiligten Vorrichtungskomponenten, nämlich
- Ein- und Ausschalten, gegebenenfalls auch Leistungsregelung der Pumpe 15 über Steuerleitung 21,
- den Betrieb der Dosiereinrichtung 13 über Steuerleitung 22,
- die Einstellung des Absperrventils 17 über Steuerleitung 23,
- die Einstellung des Absperrorgans 19 über Steuerleitung 24,
- die Heizleistung des Heizelements 10 über Steuerleitung 25,
- die Anzeige bzw. Signalisierung des Harnstoff-Füllstandes im Vorratsbehälter 7 über Steuerleitung 26 mittels der Anzeige- und/oder Signalvorrichtung 27.

Hierzu erhält die elektronische Steuereinrichtung 20 eine Vielzahl von sensorisch erfassten Istwerten signalisiert, wie
- Temperatur, gegebenenfalls auch Druck des Abgases in der Abgasleitung 4 vor dem Vorkatalysator 5 über Messleitung 28,
- NOₓ-Gehalt in der Abgassammelleitung 2 über Messleitung 29,
- Drehzahl, Drehmoment, evtl. auch Abgasmassenstrom des Verbrennungsmotors 1 über Messleitung 30,
- Temperatur des Abgasteilstroms in der Speiseleitung 18 über Messleitung 31,
- Füllstand im Vorratsbehälter vom Sensor 12 über Messleitung 32,
- Temperatur in der Thermolysezone der Reaktionskammer 9 über Messleitung 33,
- Temperatur des Abgases in der Abgasleitung 4 eingangs des SCR-Katalysators 6 über Messleitung 34.

Der Reaktor 8 ist im dargestellten Beispiel benachbart zur Brennkraftmaschine und möglichst nahe zu der Stelle hingerückt angeordnet, dass die Speiseleitung 18 sehr kurz und so der Wärmeverlust des abgezweigten Abgasteilstroms bis zum Eintritt in die Reaktionskammer 9 gering ist und somit praktisch das volle Potential zur Reduzierung des Heizleistungsbedarfs des Heizelements 10, das sich aus dem Wärme- bzw. Heizbeitrag des Abgasteilstroms ergibt, ausnutzbar ist.

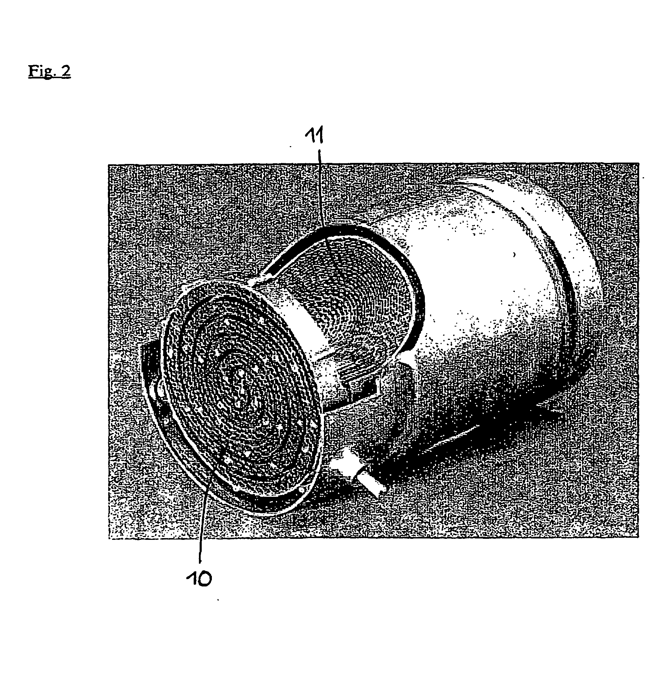

Das elektrische Heizelement 10 kann auf verschiedene Weise realisiert und auch in unterschiedlichen Bereichen der Reaktionskammer 8 angeordnet sein. So kann es beispielsweise durch einen spiralförmig gewickelten oder einen plattenförmigen oder rippenförmigen Heizkörper gebildet sein. Die elektrisch beheizte Fläche des Heizelements 10 kann direkt vor der Stirnfläche des Hydrolysekatalysators 11 (wie in Fig. 1 dargestellt) positioniert oder - wie Fig. 2 zeigt - räumlich in den Hydrolysekatalysator 11 integriert sein. Die Temperatur der beheizten Metallfläche des Heizelements 10 wird durch entsprechende Temperaturregelung von der Steuereinrichtung 20 her in einem Bereich zwischen 200°C und 450°C so hoch eingestellt, dass bei der spontanen Vergasung des in die Reaktionskammer 9 eingespeisten Harnstoffs von diesem keine festen Rückstände übrig bleiben. Außerdem kann die elektrisch beheizte Metallfläche des Heizelements 10 eine die Zersetzungstemperatur des Harnstoffs herabsetzende katalytische Beschichtung haben. Die Heizfläche des Heizelements 10 besitzt grundsätzlich eine solche Wärmekapazität, dass durch den zur spontanen Vergasung der maximalen Harnstoffmenge erforderlichen Wärmeentzug ihre Temperatur nicht unter eine Schwelle sinken kann, die eine nur eine unvollständige Vergasung mit festen Rückständen zur Folge hätte. Von der Auslasszone 35 des Reaktors 8, in der sich die Reaktionsprodukte Ammoniak (NH₃) und Kohlendioxid (CO₂) sammeln, geht eine Speiseleitung 36 ab, die zur Abgasleitung 4 hinführt und in dieser endseitig düsenartig ausgebildet oder mit einer Düse 37 ausgestattet ist. Über die Speiseleitung 36 und die Düse 37 wird das im Reaktor 8 erzeugte Ammoniak (NH₃)/Kohlendioxid (CO₂)-Gasgemisch unmittelbar nach seiner Erzeugung stromab des Vorkatalysators 5 nahe bei diesem in die Abgasleitung 4 eingedüst; so dass die gesamte verbleibende Strecke zwischen Eindüsstelle und Eintritt in den SCR-Katalysator 6 zur Homogenisierung des Reduktionsmittels Ammoniak (NH₃) im Abgasstrom ausnützbar ist.

Von der elektronischen Steuereinrichtung 20 wird aufgrund der ihr signalisierten Istwertzuständer ermittelt bzw. berechnet, zu welchen Zeitpunkten eine exakt wertmäßig definierte Menge an Reduktionsmittel Ammoniak (NH₃), die für eine optimierte Stickoxidreduzierung mittels des SCR-Katalysators 6 notwendig ist, erzeugt werden muss und wie hierfür die von ihr zu steuernden Organe 10, 13, 15, 17, 19 der erfindungsgemäßen Vorrichtung entsprechend betätigt bzw. eingestellt werden müssen. Dabei kann abhängig auch von der Art der Dosiereinrichtung 13 ein kontinuierlicher oder diskontinuienicher Dosiermodus für die Hamstoffzufuhr in den Reaktor 8 gewählt werden.

Mit der erfindungsgemäßen Vorrichtung ist das erfindungsgemäße Verfahren zur Erzeugung von Ammoniak (NH₃) demzufolge so durchzuführen, dass trockener Harnstoff aus einer Bevorratung 7 in geregelter Menge einem Reaktor 8 zugeführt und in diesem durch Blitzthermolyse, also spontane Reaktion, in Ammoniak (NH₃) und Isocyansäure (HNCO) gespalten und das so entstandene Gasgemisch unmittelbar anschließend in Gegenwart von Wasser (H₂O) katalytisch so nachbehandelt wird, dass auch die aus der Blitzthermolyse resultierende Isocyansäure (HNCO) durch quantitative Hydrolyse in Ammoniak (NH₃) und Kohlendioxid (CO₂) umgewandelt wird. Das erhaltene Ammoniak (NH₃) wird unmittelbar anschließend als Reduktionsmittel in einen aus einem Verbrennungsprozess eines Motors, einer Gastucbine oder eines Brenners resultierenden Abgasstrom für die selektive katalytische Reduktion darin enthaltener Abgase eingespeist. Der in Granulat-, Pulver- oder Prill-Form in einem Vorratsbehälter 7 bevorratete Harnstoff wird mittels einer Dosiereinrichtung 13 kanalisiert unter Zuhilfenahme eines Trägerluftstroms in dem Reaktor 8 eingespeist. In dessen Reaktionskammer 9 erfolgt die Blitzthermolyse des Harnstoffs an einer elektrisch beheizten Metallfläche 10 unter spontanem Vergasen, wobei die elektrisch beheizte Metallfläche des Heizelements 10 eine katalytische Beschichtung haben kann, die die Zersetzungstemperatur des Harnstoffs herabsetzt. Die Temperatur der elektrisch beheizten Metallfläche 10 wird zwischen 200°C und 450°C auf einen solchen Wert eingestellt, dass der Harnstoff bei der Blitzthermolyse vollständig, d. h. ohne dass feste Rückstände bleiben, vergast. Das zur katalytischen Hydrolyse der Isocyansäure (HNCO) im Reaktor 8 erforderliche Wasser kann durch einen Abgasstrom bereitgestellt werden, der dem Reaktor zugeführt wird. Die Quantität dieses Abgasstromes wird in Abhängigkeit von der Abgastemperatur derart geregelt eingestellt, dass bei einer oberhalb der Harnstoffzersetzungstemperatur liegenden Abgastemperatur zur Verminderung der elektrischen Heizleistung ein größerer Abgasstrom in den Reaktor 8 eingespeist wird als bei Abgastemperaturen unterhalb der Harnstoffzersetzungstemperatur.

Bei Anwendung der erfindungsgemäßen Vorrichtung und des erfindungsgemäßen Verfahrens in räumlicher Nachbarschaft zu einem Verbrennungsmotor, einer Gasturbine oder einem Brenner einer stationären Anlage wie Blockheizkraftwerk oder Notstromaggregat oder einer mobilen Anlage wie Kraftfahrzeug, Nutzfahrzeug, Lokomotive, Schiff bzw. Boot oder Flugzeug wird von dem aus dem Verbrennungsprozess resultierenden Abgashauptstrom ein Abgasteilstrom abgezweigt und in eingestellter oder geregelter Menge in den Reaktor 8 eingespeist, dessen Wasseranteil zur katalytischen Hydrolyse der neben Ammoniak (NH₃) aus der vorherigen Blitzthermolyse hervorgegangenen Isocyansäure (HNCO) in Ammoniak (NH₃) und Kohlendioxid (CO₂) herangezogen wird. Das hiernach entstandene Gasgemisch wird sofort aus dem Reaktor 8 abgeführt und in die den Abgashauptstrom führende Abgasleitung 4 strömungsmäßig vor einem SCR-Katalysator 6 bzw. vor mehreren z. B. in einem Schalldämpfer eingebauten, parallel durchströmbaren SCR-Katmodulen eingedüst, wobei Ammoniak (NH₃) im SCR-Katsystem als Reduktionsmittel die Stickoxidreduktion unterstützt.

## Patentansprüche

1. Verfahren zur Erzeugung von Ammoniak (NH₃) und dessen anschließende Einspeisung als Reduktionsmittel in einen aus einem Verbrennungsprozess eines Motors, einer Gasturbine oder eines Brenners resultierenden Abgasstrom für die selektive katalytische Reduktion darin enthaltener Stickoxide, **dadurch gekennzeichnet, dass** trockener Harnstoff aus einer Bevorratung (7) in geregelter Menge einem außerhalb des Abgasstromes angeordneten Reaktor (8) zugeführt und in diesem durch Blitzthermolyse in Ammoniak (NH₃) und Isocyansäure (HNCO) gespalten und das so entstandene Gasgemisch unmittelbar anschließend in Gegenwart von Wasser (H₂O) katalytisch so nachbehandelt wird, dass auch die aus der Blitzthermolyse resultierende Isocyansäure (HNCO) durch quantitative Hydrolyse in Ammoniak (NH₃) und Kohlendioxid (CO₂) umgewandelt wird.

2. Verfahren nach Anspruch 1, **dadurch gekennzeichnet, dass** der in Granulat-, Pulveroder Prill-Form in einem Vorratsbehälter (7) bevorratete Harnstoff mittels einer Dosiereinrichtung (13) über einen als Transportmedium dienenden Luftstrom in den Reaktor (8) eingespeist wird.

3. Verfahren nach einem der vorhergehenden Ansprüche, **dadurch gekennzeichnet, dass** die Blitzthermolyse des in den Reaktor (8) eingespeisten Harnstoffs im Reaktor (8) an einer elektrisch beheizten Metallfläche (10) unter spontanem Vergasen erfolgt.

4. Verfahren nach einem der Ansprüche 1 und 2, **dadurch gekennzeichnet, dass** die Blitzthermolyse des in den Reaktor (8) eingespeisten Harnstoffs an einer eine katalytische Beschichtung enthaltenden beheizten Metallfläche (10) unter spontanen Vergasen erfolgt, wobei die katalytische Beschichtung der Metallfläche die Zersetzungstemperatur des Harnstoffs herabsetzt.

5. Verfahren nach einem der Ansprüche 3 und 4, **dadurch gekennzeichnet, dass** die Temperatur der elektrisch beheizten Metallfläche (10) zwischen 200°C und 450°C auf einen solchen Wert eingestellt wird, dass der Harnstoff bei der Blitzthermolyse vollständig, d. h., ohne dass feste Rückstände bleiben, vergast wird.

6. Verfahren nach Anspruch 1, **dadurch gekennzeichnet, dass** das zur katalytischen Hydrolyse der Isocyansäure (HNCO) erforderliche Wasser (H₂O) mit einem Abgasstrom bereitgestellt wird, der ebenso wie der Harnstoff in den Reaktor (8) eingespeist wird.

7. Verfahren nach Anspruch 6, **dadurch gekennzeichnet, dass** die Quantität des Abgasstromes, der in den Reaktor (8) eingespeist wird, in Abhängigkeit von der Abgastemperatur derart geregelt eingestellt wird, dass bei einer oberhalb der Harnstoffzersetzungstemperatur liegenden Abgastemperatur zur Verminderung der elektrischen Heizleistung ein größerer Abgasstrom in den Reaktor (8) eingespeist wird als bei Abgastemperaturen unterhalb der Harnstoffzersetzungstemperatur.

8. Verfahren nach einem der Ansprüche 1 bis 7, **gekennzeichnet durch** seine Anwendung in räumlicher Nachbarschaft zu einem Verbrennungsmotor (1), einer Gasturbine oder einem Brenner, wobei von dem Abgas, das aus dem diesbezüglichen Verbrennungsprozess resultiert, ein Abgasteilstrom (18) abgezweigt und in eingestellter Menge in den Reaktor (8) eingespeist wird, dessen Wasseranteil zur katalytischen Hydrolyse der neben Ammoniak (NH₃) aus der vorherigen Blitzthermolyse hervorgegangenen Isocyansäure (HNCO) in Ammoniak (NH₃) und Kohlendioxid (CO₂) herangezogen wird, wobei dieses solchermaßen entstandene Gasgemisch aus dem Reaktor (8) abgeführt und in eine den aus dem Verbrennungsprozess resultierenden Abgasstrom führende Abgasleitung (4) vor einem SCR-Katalysator (8) eingedüst wird, wobei anschließend in letzterem der Ammoniak (NH₃) die NOₓ-Reduktion unterstützt.

9. Vorrichtung zur Erzeugung von Ammoniak (NH₃) und dessen anschließende Einspeisung als Reduktionsmittel in einen aus einem Verbrennungsprozess eines Motors (1), einer Gasturbine oder eines Brenners resultierenden Abgasstrom für die selektive Reduktion darin enthaltener Stickoxide, **gekennzeichnet durch** folgende Merkmale:
- einen Vorratsbehälter (7), in dem Harnstoff trocken in Form von Pulver, Granulat oder Mikroprills bevorratet ist,
- einen außerhalb des Abgasstromes angeordneten Reaktor (8) zur Ammoniakerzeugung mit einer elektrisch beheizbaren Reaktionskammer (9), die sich in eine Thermolysezone und eine Hydrolysezone unterteilt,
- eine Vorrichtung (13, 14, 15, 16, 17), mit der Harnstoff aus dem Vorratsbehälter (7) in geregelter Menge dem Reaktor (8) zuführbar ist,
- ein elektrisches Heizelement (10) in der Thermolysezone der Reaktionskammer (9) des Reaktors (8),
- eine Vorrichtung (20) zur Regelung der Heiztemperatur des Heizelements (10) in der Weise, dass der in die Reaktionskammer (9) eingespeiste Harnstoff **durch** Blitzthermolyse spontan in Ammoniak (NH₃) und Isocyansäure (HNCO) aufspaltbar ist,
- eine Vorrichtung (18, 19) zur Einspeisung von Wasser oder eines wasserhaltigen Gases in die Reaktionskammer (9) des Reaktors (8),
- einen Hydrolysekatalysator (11) in der Hydrolysezone der Reaktionskammer (9) des Reaktors (8), mit dem die aus der Blitzthermolyse des Harnstoffs neben Ammoniak (NH₃) hervorgehende Isocyansäure (HNCO) in Gegenwart von Wasser (H₂O) in Ammoniak (NH₃) und Kohlendioxid (CO₂) umwandelbar ist.

10. Vorrichtung nach Anspruch 9, **dadurch gekennzeichnet, dass** der in die Reaktorkammer (9) eingebaute Hydrolysekatalysator (11) so dimensioniert ist, dass eine quantitative Umsetzung der Isocyansäure (HNCO) zu Ammoniak (NH₃) und Kohlendioxid (CO₂) erfolgen kann.

11. Vorrichtung nach Anspruch 9, **dadurch gekennzeichnet, dass** der zur Bevorratung des Harnstoffs dienende Vorratsbehälter (7) gegenüber Luftfeuchtigkeitseinflüssen und hohen Temperaturen isoliert ist, so dass der Harnstoff im Vorratsbehälter (7) weder schmilzt noch aufgrund seiner hygroskopischen Eigenschaften verklebt.

12. Vorrichtung nach Anspruch 9, **dadurch gekennzeichnet, dass** am oder benachbart zum Vorratsbehälter (7) eine Dosiervorrichtung (13) vorgesehen ist, mit der der Harnstoff über eine Förderleitung (14) in die Reaktionskammer (9) des Reaktors (8) einspeisbar ist.

13. Vorrichtung nach Anspruch 12, **dadurch gekennzeichnet, dass** die Dosiereinrichtung (13) von dem Reaktor (8) mit der beheizten Reaktionskammer (9) ein solches Maß beabstandet und damit thermisch entkoppelt ist, dass ein Schmelzen des Harnstoffs in der Dosiereinrichtung (13) und ein damit einhergehendes Verstopfen bzw. Verkleben derselben unterbindbar ist.

14. Vorrichtung nach Anspruch 13, **dadurch gekennzeichnet, dass** die thermische Entkoppelung der Dosiereinrichtung (13) durch einen Trägerluftstrom unterstützbar ist, der durch eine vorzugsweise elektrisch angetriebene Pumpe (15) erzeugbar oder einer anderen Druckluftquelle entnehmbar und der Dosierungseinrichtung (13) zuführbar ist sowie primär als Transportmittel für den in die Reaktionskammer (9) einzuspeisenden Harnstoff dient.

15. Vorrichtung nach Anspruch 12, **dadurch gekennzeichnet, dass** in die Förderleitung (14) ein vorzugsweise elektromagnetisch steuerbares Absperrventil (17) eingebaut ist, mit dem die Förderleitung (14) in bestimmten Betriebszuständen absperrbar und so ein Vordringen von Wasser aus dem Reaktor (8) zur Dosiereinrichtung (13) hin verhinderbar ist.

16. Vorrichtung nach einem der Ansprüche 12 bis 15, **dadurch gekennzeichnet, dass** die Förderleistung der Dosiereinrichtung (13) und der Betrieb der Pumpe (15) sowie die Schaltung des Absperrventils (17) durch eine elektronische Steuereinrichtung (20) steuerbar ist.

17. Vorrichtung nach Anspruch 9, **dadurch gekennzeichnet, dass** die Vorrichtung zur Einspeisung von Wasser oder eines wasserhaltigen Gases, insbesondere Verbrennungsabgas, in die Reaktionskammer (9) des Reaktors (8) eine von einer Spenderquelle, insbesondere Abgasleitung (2, 4), abzweigende Speiseleitung (18) und ein in diese eingebautes, elektrisch steuerbares Absperrorgan (19) wie Absperrventil oder Absperrklappe aufweist, das zwischen Auf- und Zu-Stellung vorzugsweise auch durchflussmengensteuemde Zwischenstellungen einnehmen kann und dessen Einstellung durch eine elektronische Steuereinrichtung (20) steuerbar ist.

18. Vorrichtung nach Anspruch 9, **dadurch gekennzeichnet, dass** das in der Thermolysezone der Reaktionskammer (9) im Reaktor (8) angeordnete Heizelement (10) durch einen spiralförmig gewickelten oder plattenförmigen oder rippenförmigen Heizkörper gebildet ist.

19. Vorrichtung nach einem der Ansprüche 9 und 18, **dadurch gekennzeichnet, dass** die in der Reaktionskammer (9) herrschende Temperatur oder die Temperatur des Heizelements (10) mittels eines Temperaturfühlers erfasst und an eine elektronische Steuereinrichtung (20) gemeldet wird, und dass von dieser Steuereinrichtung (20) die Temperatur der elektronisch beheizten Heizfläche des Heizelements (10) in der Reaktionskammer (9) in einem Bereich zwischen 200°C und 450°C so hoch eingestellt wird, dass bei der spontanen Vergasung des Harnstoffs von diesem keine festen Rückstände bleiben.

20. Vorrichtung nach einem der Ansprüche 18 und 19, **dadurch gekennzeichnet, dass** die elektrisch beheizte Metallfläche des Heizelements (10) eine die Zersetzungstemperatur des Harnstoffs herabsetzende katalytische Beschichtung haben kann und grundsätzlich eine solch große Wärmekapazität besitzt, dass durch den zur spontanen Vergasung der maximalen Harnstoffmenge erforderlichen Wärmeentzug ihre Temperatur nicht unter eine Temperatur sinken kann, die eine rückstandsfreie Vergasung des Harnstoffs nicht zuließe.

21. Vorrichtung nach Anspruch 9, **dadurch gekennzeichnet, dass** die elektrisch beheizbare Fläche des Heizelements (10) in der Reaktionskammer (9) des Reaktors (8) direkt vor der Stirnfläche des Hydrolysekatalysators (11) positioniert ist.

22. Vorrichtung nach Anspruch 9, **dadurch gekennzeichnet, dass** die elektrisch beheizbare Fläche des Heizelements (10) in der Reaktionskammer (9) des Reaktors (8) räumlich in den dortigen Hydrolysekatalysator (11) integriert ist.

23. Vorrichtung nach einem der Ansprüche 9 bis 22, **dadurch gekennzeichnet, dass** bei ihrer Anwendung zur Erzeugung von Ammoniak (NH₃), der als Reduktionsmittel in einen aus einem Verbrennungsprozess eines Motors, einer Gasturbine oder eines Brenners einer stationären Anlage wie Blockheizkraftwerk oder Notstromaggregat oder einer mobilen Anlage wie Kraftfahrzeug, Nutzfahrzeug, Lokomotive, Schiff bzw. Boot oder Flugzeug resultierenden Abgasstrom für die selektive katalytische Reduktion darin enthaltener Stickoxide einspeisbar ist, der Reaktor (8) benachbart zum Motor (1), der Gasturbine oder dem Brenner oder der an diesem Aggregat abgehenden Abgasleitung (2, 4) angeordnet ist, in welcher Abgasleitung (2, 4) ein Vorkatalysator (Oxikat) (5), der neben der Oxidation von CO und HC für eine signifikante Erhöhung des NO₂-Anteits im Abgas sorgt, und stromab des Vorkatalysators (5) ein SCR-Katalysator (6) oder ein Schalldämpfer mit mehreren eingebauten, parallel durchströmten SCR-Kat-Modulen eingebaut sind, und dass der im Reaktor (8) erzeugte Ammoniak (NH₃) aus diesem über eine Rohrleitung (36) abgeführt und stromab des Vorkatalysators (5) nahe bei diesem in die Abgasleitung (4) eindüsbar und so die gesamte verbleibende Strecke zwischen Eindüsstelle und Eintritt in den SCR-Katalysator (6) bzw. die SCR-Kat-Module zur Homogenisierung des Ammoniaks (NH₃) im Abgasstrom ausnützbar ist.

24. Vorrichtung nach Anspruch 23, **dadurch gekennzeichnet, dass** eine einzige elektronische Steuereinrichtung (20) vorgesehen ist, die für die Regelung und Steuerung aller am Prozess der Ammoniakerzeugung beteiligten Systemkomponenten im Hinblick auf die für Eindüsung in die Abgasleitung (4) exakt notwendige Menge von Ammoniak (NH₃) maßgeblich ist.

## Claims

1. Process for the generation of ammonia (NH₃) and its subsequent use as a reducing agent fed into a flow of exhaust gases resulting from a combustion process in an engine, a gas turbine or a burner, for the selective catalytic reduction of oxides of nitrogen contained therein, **characterised in that** dry urea is supplied in a controlled quantity from a reservoir (7) to a reactor (8) arranged outside the flow of exhaust gases and is split up into ammonia (NH₃) and isocyanic acid (HNCO) by means of flash thermolysis, that immediately afterwards the gas mixture thus created undergoes catalytic aftertreatment in the presence of water (H₂O) and that the isocyanic acid (HNCO) resulting from the flash thermolysis is converted into ammonia (NH₃) and carbon dioxide (CO₂) by means of quantitative hydrolysis.

2. Process according to Claim 1, **characterised in that** the urea stored in the form of granules, powder or prills in a reservoir (7) is fed into the reactor (8) by means of a metering device (13) via a flow of air serving as a means of transport.

3. Process according to one of the foregoing Claims, **characterised in that** the flash thermolysis of the urea fed into the reactor (8) is carried out on an electrically heated metal face (10) in the reactor (8) under spontaneous gasification.

4. Process according to one of the Claims 1 and 2, **characterised in that** the flash thermolysis of the urea fed into the reactor (8) is carried out on an electrically heated metal face (10) with a catalytic coating under spontaneous gasification, the catalytic coating of said metal face (10) reducing the decomposition temperature of the urea.

5. Process according to one of the Claims 3 and 4, **characterised in that** the temperature of the electrically heated metal face (10) is set to such a value between 200°C and 450°C that in the flash thermolysis the urea is gasified completely, ie without any solid residues remaining.

6. Process according to Claim 1, **characterised in that** the water (H₂O) necessary for the catalytic hydrolysis of the isocyanic acid (HNCO) is provided together with a flow of exhaust gases fed into the reactor (8) just like the urea.

7. Process according to Claim 6, **characterised in that** the quantity of the flow of exhaust gases fed into the reactor (8) is set in a controlled manner as a function of the exhaust-gas temperature so that if the exhaust-gas temperature is above the urea decomposition temperature the flow of exhaust gases fed into the reactor (8) is, in order to reduce the electric heating output, larger than when the exhaust-gas temperature is below the urea decomposition temperature.

8. Process according to one of the Claims 1 to 7, **characterised by** its application in spatial vicinity to an internal combustion engine (1), a gas turbine or a burner, whereby from the exhaust gases resulting from the relevant combustion process a partial flow of exhaust gases (18) is branched off and fed into the reactor (8) in an adjusted quantity, the water content of which partial flow of exhaust gases is used for the catalytic hydrolysis of the isocyanic acid (HNCO) into ammonia (NH₃) and carbon dioxide (CO₂), which isocyanic acid (HNCO) was, together with ammonia (NH₃), created in the previous flash thermolysis, whereby the gas mixture thus created is removed from the reactor (8) and injected into the exhaust-gas pipe (4) upstream of an SCR catalytic converter (8) by means of a nozzle, which exhaust-gas pipe (4) conducts the exhaust gases resulting from the combustion process, whereby the ammonia (NH₃) subsequently supports the NOₓ reduction in said SCR catalytic converter.

9. Device for the generation of ammonia (NH₃) and its subsequent use as a reducing agent fed into a flow of exhaust gases resulting from a combustion process in an engine (1), a gas turbine or a burner, for the selective catalytic reduction of oxides of nitrogen contained therein, **characterised by** the following features:
• a reservoir (7) in which urea is stored dry in the form of powder, granules or microprills,
• a reactor (8) arranged outside the flow of exhaust gases and used for the generation of ammonia with an electrically heatable reaction chamber (9) subdivided into a thermolysis zone and a hydrolysis zone,
• a device (13, 14, 15, 16, 17) with which urea can be supplied from the reservoir (7) to the reactor (8) in a controlled quantity,
• an electric heating element (10) in the thermolysis zone of the reaction chamber (9) in the reactor (8),
• a device (20) for controlling the heating temperature of the heating element (10) in such a way that the urea fed into the reaction chamber (9) can be spontaneously split into ammonia (NH₃) and isocyanic acid (HNCO) by means of flash thermolysis,
• a device (18, 19) for feeding water or a water-containing gas into the reaction chamber (9) in the reactor (8),
• a hydrolytic catalytic converter (11) in the hydrolysis zone of the reaction chamber (9) in the reactor (8) with which the isocyanic acid (HNCO), which, together with ammonia (NH₃), results from the flash thermolysis of the urea, can be converted into ammonia (NH₃) and carbon dioxide (CO₂) in the presence of water (H₂O).

10. Device according to Claim 9, **characterised in that** the hydrolytic catalytic converter (11) installed in the reaction chamber (9) is dimensioned so that a quantitative conversion of the isocyanic acid (HNCO) to ammonia (NH₃) and carbon dioxide (CO₂) can take place.

11. Device according to Claim 9, **characterised in that** the reservoir (7) for storing the urea is insulated against humidity influences and high temperatures so that the urea in the reservoir (7) neither melts nor glues together because of its hygroscopic properties.

12. Device according to Claim 9, **characterised in that** on or adjacent to the reservoir (7) a metering device (13) is provided, by means of which the urea can be fed into the reaction chamber (9) in the reactor (8) via a delivery line (14).

13. Device according to Claim 12, **characterised in that** the metering device (13) is placed at such a distance from the reactor (8) with the heated reaction chamber (9) and is therefore thermally decoupled that the urea can be prevented from melting in the metering device (13) and that, consequently, the metering device (13) can be prevented from clogging or gluing up.

14. Device according to Claim 13, **characterised in that** the thermal decoupling of the metering device (13) can be supported by a flow of carrier air which can be generated by a preferably electric pump (15) or be taken from another source of compressed air and be supplied to the metering device (13) and serves primarily as a means of transport for the urea to be fed into the reaction chamber (9).

15. Device according to Claim 12, **characterised in that** a preferably electromagnetically controllable shut-off valve (17) is installed in the delivery line (14), with which shut-off valve (17) the delivery line (14) can be shut off in certain operating conditions, thus preventing water from flowing from the reactor (8) to the metering device (13).

16. Device according to one of the Claims 12 to 15, **characterised in that** the delivery rate of the metering device (13), the operation of the pump (15) and the switching of the shut-off valve (17) can be controlled by an electronic control unit (20).

17. Device according to Claim 9, **characterised in that** the device for feeding water or a water-containing gas, particularly combustion gas, into the reaction chamber (9) in the reactor (8) is equipped with a feed line (18) branching off from a supply source, particularly an exhaust-gas line (2, 4), and with an electrically controllable shut-off organ (19) which is installed in said feed line (18) and is provided in the form of a shut-off valve or a shut-off flap, which shut-off organ (19) can assume also intermediate positions between the open and shut positions, which intermediate positions are preferably of a flow-controlling nature, the adjustment of which shut-off organ (19) being controllable by means of an electronic control unit (20).

18. Device according to Claim 9, **characterised in that** the heating element (10) arranged in the thermolysis zone of the reaction chamber (9) in the reactor (8) is provided in the form of a spirally coiled or plate- or rib-type heating element.

19. Device according to one of the Claims 9 and 18, **characterised in that** the temperature prevailing in the reaction chamber (9) or the temperature of the heating element (10) is recorded by means of a temperature sensor and sent to an electronic control unit (20) and that the temperature of the electronically heated heating face of the heating elements (10) in the reaction chamber (9) is set so high in a range between 200°C and 450°C by this control unit (20) that no solid urea residues remain after the spontaneous gasification of said urea.

20. Device according to one of the Claims 18 and 19, **characterised in that** the electrically heated metal face of the heating element (10) may have a catalytic coating reducing the decomposition temperature of the urea and on principle has such a high calorific capacity that owing to the heat extraction necessary for the spontaneous gasification of the maximum urea quantity the temperature of said metal face cannot fall below a temperature which would not permit residue-free gasification of the urea.

21. Device according to Claim 9, **characterised in that** the electrically heatable face of the heating element (10) in the reaction chamber (9) of the reactor (8) is positioned directly upstream of the front face of the hydrolytic catalytic converter (11).

22. Device according to Claim 9, **characterised in that** the electrically heatable face of the heating element (10) in the reaction chamber (9) of the reactor (8) is spatially integrated in the hydrolytic catalytic converter (11) provided there.

23. Device according to one of the Claims 9 to 22, **characterised in that** in its use for the generation of ammonia (NH₃) used as a reducing agent that can be fed into a flow of exhaust gases resulting from a combustion process of an engine, a gas turbine or a burner of a stationary system such as a co-generation plant or an emergency power unit or a mobile system such as a motor vehicle, commercial vehicle, locomotive, ship, boat or aeroplane and used for the selective catalytic reduction of oxides of nitrogen contained therein, the reactor (8) is close to the engine (1), the gas turbine or the burner or to the exhaust-gas line (2, 4) branching off from said unit, in which exhaust-gas line (2, 4) a primary catalytic converter (Oxikat) (5) provided for the oxidation of CO and HC and for a significant increase in the NO₂ content in the exhaust gas and that downstream of the primary catalytic converter (5) an SCR catalytic converter (6) or a silencer with several integrated SCR Kat modules is installed, through which SCR Kat modules exhaust gas flows in parallel, and that the ammonia (NH₃) generated in the reactor (8) exits said reactor (8) via a pipeline (36) and can be injected into the exhaust-gas line (4) at a point downstream of and close to the primary catalytic converter (5) and that consequently the entire remaining distance between the injection point and the entry into the SCR catalytic converter (6) and the SCR Kat modules can be used for homogenising the ammonia (NH₃) in the flow of exhaust gases.

24. Device according to Claim 23, **characterised in that** a single electronic control unit (20) is provided and is decisive for regulating and controlling all system components participating in the process of ammonia generation in respect of the exact quantity of ammonia (NH₃) necessary for the injection into the exhaust-gas pipe (4).

## Revendications

1. Procédé de production d'ammoniac (NH₃) et de son stockage ultérieur comme agent de réduction dans un flux de gaz d'échappement résultant d'un processus de combustion d'un moteur, d'une turbine à gaz ou d'un brûleur pour réaliser la réduction catalytique sélective des oxydes d'azote contenus dans les gaz d'échappement, **caractérisé en ce que** l'urée sec provenant d'un réservoir de stockage (7) est amenée en quantité régulée vers un réacteur (8) placé à l'extérieur du flux des gaz d'échappement et est transformé dans ce réacteur par thermolyse éclair en ammoniac (NH₃) et en acide isocyanique (HNCO) et le mélange gazeux obtenu est ensuite directement traité ultérieurement de manière catalytique en présence d'eau (H₂O) de telle manière que l'acide isocyanique (HNCO) résultant de la thermolyse éclair soit également transformée en ammoniac (NH₃) et en dioxyde de carbone (CO₂) par hydrolyse quantitative.

2. Procédé selon la revendication 1, **caractérisé en ce que** l'urée stockée sous forme de granulés, de poudre ou de billes dans un réservoir (7) est amenée dans le réacteur (8) au moyen d'un dispositif de dosage (13) par l'intermédiaire d'un flux d'air servant de moyen de transport.

3. Procédé selon l'une quelconque des revendications mentionnées précédemment, **caractérisé en ce que** la thermolyse éclair de l'urée stockée dans le réacteur (8) a lieu dans le réacteur (8) par gazéification spontanée sur une surface métallique (10) chauffée électriquement.

4. Procédé selon l'une quelconque des revendications 1 et 2, **caractérisé en ce que** la thermolyse éclair de l'urée stockée dans le réacteur (8) a lieu par gazéification spontanée sur une surface métallique (10) chauffée contenant un revêtement catalytique, auquel cas le revêtement catalytique de la surface métallique abaisse la température de décomposition de l'urée.

5. Procédé selon l'une quelconque des revendications 3 et 4, **caractérisé en ce que** la température de la surface métallique (10) chauffée électriquement est définie selon une telle valeur comprise entre 200 °C et 450 °C que, lors de la thermolyse éclair, l'urée soit gazéifiée complètement, c'est-à-dire sans résidus solides.

6. Procédé selon la revendication 1, **caractérisé en ce que** l'eau (H₂O) indispensable à l'hydrolyse catalytique de l'acide isocyanique (HNCO) est mise à disposition avec un flux de gaz d'échappement qui, comme l'urée, est également amené dans le réacteur (8).

7. Procédé selon la revendication 6, **caractérisé en ce que** la quantité du flux de gaz d'échappement qui est amenée dans le réacteur (8) est définie de façon régulée en fonction de la température des gaz d'échappement de telle manière qu'en cas de température des gaz d'échappement supérieure à la température de décomposition de l'urée, un flux plus important de gaz d'échappement qu'en cas de température des gaz d'échappement inférieure à la température de décomposition de l'urée est amené dans le réacteur (8) pour réduire la puissance calorifique électrique.

8. Procédé selon l'une quelconque des revendications 1 à 7, **caractérisé par** son application à proximité d'un moteur à combustion (1), d'une turbine à gaz ou d'un brûleur, auquel cas une partie du flux des gaz d'échappement (18) est prélevée des gaz d'échappement résultant du processus de combustion dans ces organes mécaniques et est amenée dans le réacteur (8) par quantité définie, sa part d'eau pour réaliser l'hydrolyse catalytique de l'acide isocyanique (HNCO) résultant, en plus de l'ammoniac, de la thermolyse éclair précédente est transformée en ammoniac (NH₃) et en dioxyde de carbone (CO₂), auquel cas ce mélange gazeux généré de cette manière est évacué du réacteur (8) et injecté en amont du catalyseur SCR (8) dans un tuyau d'échappement (4) guidant le flux de gaz d'échappement résultant du processus de combustion et auquel cas l'ammoniac contribue ensuite à la réduction des NOₓ dans ce catalyseur SCR (8).

9. Dispositif pour produire de l'ammoniac (NH₃) et le stocker ultérieurement comme agent de réduction dans un flux de gaz d'échappement résultant d'un processus de combustion d'un moteur, d'une turbine à gaz ou d'un brûleur pour réaliser la réduction catalytique sélective des oxydes d'azote contenus dans les gaz d'échappement, **caractérisé par** les éléments suivants :
- un réservoir (7) dans lequel est stocké de l'urée de manière sec sous forme de poudre, de granulés ou de microbilles,
- un réacteur (8) disposé en dehors du flux de gaz d'échappement, servant à produire de l'ammoniac, avec une chambre à réaction (9) chauffable électriquement, qui se divise en zone de thermolyse et en zone d'hydrolyse,
- un dispositif (13, 14, 15, 16, 17) avec lequel l'urée peut être transporté du réservoir (7) au réacteur (8) par quantité régulée,
- un élément chauffant (10) électrique dans la zone de thermolyse de la chambre à réaction (9) du réacteur (8),
- un dispositif (20) pour réguler la température de chauffage de l'élément chauffant (10) de telle manière que l'urée stockée dans la chambre à réaction (9) puisse être décomposée spontanément en ammoniac (NH₃) et en acide isocyanique (HNCO) par thermolyse éclair,
- un dispositif (18, 19) pour stocker l'eau ou un gaz contenant de l'eau dans la chambre à réaction (9) du réacteur (8),
- un catalyseur à hydrolyse (11) dans la zone d'hydrolyse de la chambre à réaction (9) du réacteur (8), avec lequel l'acide isocyanique (HNCO) résultant, en plus de l'ammoniac (NH₃), de la thermolyse éclair de l'urée en présence d'eau (H₂O) peut être transformée en ammoniac (NH₃) et en dioxyde de carbone (CO₂).

10. Dispositif selon la revendication 9, **caractérisé en ce que** la taille du catalyseur à hydrolyse (11) monté dans la chambre à réaction (9) est définie de telle manière qu'une transformation de l'acide isocyanique (HNCO) en ammoniac (NH₃) et en dioxyde de carbone (CO₂) puisse avoir lieu.

11. Dispositif selon la revendication 9, **caractérisé en ce que** le réservoir (7) servant à stocker l'urée est isolé contre les influences de l'humidité de l'air et des températures élevées de telle manière que l'urée stockée dans le réservoir (7) ne fonde pas ou ne colle pas en raison de ses propriétés hygroscopique.

12. Dispositif selon la revendication 9, **caractérisé en ce que**, sur ou près du réservoir (7), est prévu un dispositif de dosage (13) avec lequel l'urée peut être amenée dans la chambre à réaction (9) du réacteur (8) par le biais d'une conduite d'alimentation (14).

13. Dispositif selon la revendication 12, **caractérisé en ce que** le dispositif de dosage (13) est séparé du réacteur (8) par la chambre à réaction chauffée (9) à une telle distance et ainsi découplé thermiquement de telle manière à empêcher une fonte de l'urée dans le dispositif de dosage (13) et un colmatage et/ou une concentration par collage de celle-ci résultant de la fonte.

14. Dispositif selon la revendication 14, **caractérisé en ce que** le découplage thermique du dispositif de dosage (13) peut être soutenu par un flux d'air porteur, qui peut être produit par une pompe (15) entraînée de préférence électriquement ou peut provenir d'une autre source d'air comprimé et peut être amené au dispositif de dosage (13), et qui sert en premier lieu de moyen de transport de l'urée alimentant la chambre à réaction (9).

15. Dispositif selon la revendication 12, **caractérisé en ce que** la conduite d'alimentation (14) est munie d'une vanne de fermeture (17) à pilotage de préférence électromagnétique avec laquelle la conduite d'alimentation (14) peut être obturée dans certains états de fonctionnement et qui permet ainsi d'empêcher une fuite d'eau du réacteur (8) vers le dispositif de dosage (13).

16. Dispositif selon l'une quelconque des revendications 12 à 15, **caractérisé en ce que** le débit du dispositif de dosage (13) et le fonctionnement de la pompe (15) ainsi que l'actionnement de la vanne de fermeture (17) peuvent être pilotés par le biais d'un dispositif électronique de commande.

17. Dispositif selon la revendication 9, **caractérisé en ce que** le dispositif d'amenée d'eau ou d'un gaz contenant de l'eau, en particulier des gaz d'échappement résultant d'une combustion, dans la chambre à réaction (9) du réacteur (8) présente une conduite d'alimentation (18) dérivant d'une source distributrice, en particulier une conduite de gaz d'échappement (2, 4) et d'un organe de fermeture monté dans la conduite d'alimentation (18) et pilotable électriquement, tel qu'une vanne de fermeture ou un clapet de fermeture, qui peut prendre des positions intermédiaires entre ouverture totale et fermeture totale de préférence également pour commander le débit et son réglage peut être piloté grâce à un dispositif électronique de commande (20).

18. Dispositif selon la revendication 9, **caractérisé en ce que** l'élément chauffant (10) disposé dans la zone de thermolyse de la chambre à réaction (9) du réacteur (8) est constitué d'un élément de chauffage enroulé en spiral ou en forme de plaque ou à ailettes.

19. Dispositif selon l'une quelconque des revendications 9 et 18, **caractérisé en ce que** la température régnant dans la chambre à réaction (9) ou la température de l'élément chauffant (10) est relevée par une sonde de température et communiquée à un dispositif électronique de commande (20) et **en ce que** la température de la surface de chauffage chauffée électroniquement de l'élément chauffant (10) logé dans la chambre à réaction (9) est réglée par ce dispositif de commande (20) dans une plage comprise entre 200 °C et 450 °C aussi élevée de telle manière qu'il ne reste pas de résidus solides de l'urée lors de la gazéification spontanée de l'urée.

20. Dispositif selon l'une quelconque des revendications 18 et 19, **caractérisé en ce que** la surface métallique chauffée électriquement de l'élément chauffant (10) peut posséder un revêtement catalytique réduisant la température de décomposition de l'urée et possède systématiquement une telle capacité calorifique importante que, grâce à l'évacuation de chaleur indispensable pour la gazéification spontanée de la quantité maximale d'urée, sa température ne peut pas descendre en dessous d'une température qui ne permettrait pas une gazéification sans résidus de l'urée.

21. Dispositif selon la revendication 9, **caractérisé en ce que** la surface chauffable électriquement de l'élément chauffant (10) logé dans la chambre à réaction (9) du réacteur (8) est située directement en amont de la surface avant du catalyseur à hydrolyse (11).

22. Dispositif selon la revendication 9, **caractérisé en ce que** la surface chauffable électriquement de l'élément chauffant (10) logé dans la chambre à réaction (9) du réacteur (8) est intégrée spatialement dans le catalyseur à hydrolyse (11) placé à cet endroit.

23. Dispositif selon l'une quelconque des revendications 9 à 22, **caractérisé en ce que**, lors de son utilisation pour produire de l'ammoniac (NH₃), qui alimente comme agent de réduction le flux de gaz d'échappement résultant d'un processus de combustion d'un moteur, d'une turbine à gaz ou d'un brûleur d'une installation stationnaire telle qu'une centrale de cogénération ou un groupe électrogène ou bien d'une installation mobile tel qu'un véhicule à moteur, un véhicule industriel, une locomotive, un navire, un bateau ou un avion pour assurer la réduction catalytique sélective des oxydes d'azote contenus dans les gaz d'échappement, le réacteur est disposé près du moteur (1), de la turbine à gaz ou du brûleur ou de la conduite de gaz d'échappement (2, 4) provenant de cet organe mécanique et dans la conduite de gaz d'échappement (2, 4) duquel un précatalyseur (catalyseur à oxydation) (5), qui est chargé, en plus de l'oxydation des CO et HC, d'augmenter significativement la part des NO₂, et, en aval du précatalyseur, un catalyseur SCR (6) ou un silencieux avec plusieurs modules catalytiques SCR logés dedans en parallèle, et **en ce que** l'ammoniac (NH₃) généré dans le réacteur (8) est évacué de celui-ci par une conduite tubulaire (36) et, en aval du précatalyseur, peut être injecté près de celui-ci dans la conduite de gaz d'échappement (4) et, ainsi, le trajet complet restant entre le point d'injection et l'entrée dans le catalyseur SCR (6) ou les modules catalytiques SCR est exploitable pour homogénéiser l'ammoniac (NH₃) dans le flux de gaz d'échappement.

24. Dispositif selon la revendication 23, **caractérisé en ce qu'**un dispositif électronique de commande (20) unique est prévu et est décisif pour réguler et commander tous les composants de système impliqués dans le processus de génération d'ammoniac en rapport avec la quantité d'ammoniac (NH₃) nécessaire exactement pour l'injection dans la conduite de gaz d'échappement (4).
